# FASCICULE DE BREVET EUROPEEN

(11) **EP 3 492 383 B1**
(45) Date de publication et mention de la délivrance du brevet: **19.02.2020**
(21) Numéro de dépôt: 18204982.5
(22) Date de dépôt: 07.11.2018
(51) Int. Cl.: B64D 27/18, B64D 27/26, F16C 11/02, F16C 11/04, F16C 11/06

(54) **AXE DE PIVOTEMENT AMELIORE POUR UNE ATTACHE-MOTEUR D'AERONEF**
VERBESSERTE SCHWENKACHSE FÜR EINE MOTORBEFESTIGUNG EINES LUFTFAHRZEUGS
IMPROVED PIVOTING AXIS FOR AN AIRCRAFT ENGINE ATTACHMENT

(30) Priorité: 24.11.2017 FR 1761142
(43) Date de publication de la demande: 05.06.2019
(73) Titulaire: Airbus Operations S.A.S., 31060 Toulouse (FR)
(72) Inventeur: GELIOT, Jean, 31400 TOULOUSE (FR); ORTEU, Benoit, 31000 TOULOUSE (FR); SOULIE, Adeline, 82600 VERDUN SUR GARONNE (FR); COMBES, Stéphane, 31660 BUZET SUR TARN (FR); DEFORET, Thomas, 31300 TOULOUSE (FR)
(74) Mandataire: Gicquel, Olivier Yves Gérard

(56) Documents cités:
- EP-A1- 0 309 129
- FR-A1- 2 958 262
- US-A- 3 831 888
- US-A- 4 435 100
- US-A1- 2008 296 430

## Description

La présente demande se rapporte à un axe de pivotement amélioré pour une attache-moteur d'aéronef . Un exemple de l'art antérieur est fourni par le document US 4,435,100 A1.

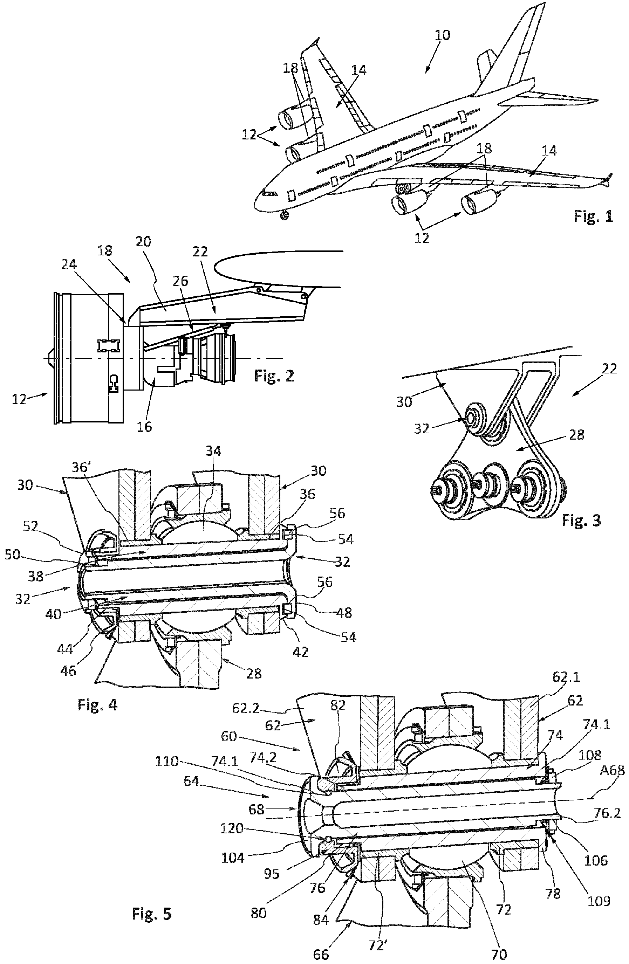

Selon une configuration visible sur les figures 1 et 2, un aéronef 10 comprend plusieurs ensembles moteurs 12 qui sont positionnés sous la voilure 14 de l'aéronef 10.

Un ensemble moteur 12 comprend un moteur 16, une nacelle (non représentée sur la figure 2) positionnée autour du moteur 16 et un mât 18 qui assure la liaison entre le moteur 16 et le reste de l'aéronef 10, notamment la voilure 14.

Le mât 18 comprend une structure primaire 20 qui est reliée au moteur 16 par une attache-moteur arrière 22, une attache-moteur avant 24 et un couple de bielles de poussée 26 qui assurent la reprise des efforts de poussée.

Comme illustré sur la figure 3, l'attache-moteur arrière 22 comprend une platine triangulaire 28 intercalée entre la structure primaire 20 du mât 18 et le moteur 16.

L'attache-moteur arrière 22 comprend également une chape 30, solidaire de la structure primaire 20, reliée à la platine triangulaire 28 par un axe de pivotement 32.

Selon un mode de réalisation visible sur la figure 4, l'axe de pivotement 32 supporte en partie centrale une rotule 34, reliant l'axe de pivotement 34 et la platine triangulaire 28, et deux paliers lisses 36, 36', disposés de part et d'autre de la rotule 34, reliant l'axe de pivotement 34 et les branches de la chape 30.

L'axe de pivotement 32 comprend un premier axe 38 tubulaire, appelé axe principal, et un deuxième axe 40 tubulaire, appelé axe de secours (ou fail safe en anglais), coaxial à l'axe principal 38 et monté à l'intérieur de ce dernier.

Le diamètre extérieur de l'axe de secours 40 est légèrement inférieur au diamètre intérieur de l'axe principal 38 de manière à ne pas engager l'axe de secours 40 à l'intérieur de l'axe principal 38 en fonctionnement normal.

L'axe principal 38 comprend, à une première extrémité, une tête 42 configurée pour prendre appui en fonctionnement contre une première branche de la chape 30 et/ou un premier palier lisse 36 et, à une deuxième extrémité, une portion filetée 44 sur laquelle un écrou 46 équipé d'un système de freinage est vissé. Lorsqu'il est serré, cet écrou 46 prend appui contre une deuxième branche de la chape 30 et/ou un deuxième palier lisse 36'.

L'axe de secours 40 comprend, à une première extrémité, une tête 48 configurée pour prendre appui en fonctionnement contre la tête 42 de l'axe principal 38 et, à une deuxième extrémité, une portion filetée 50 sur laquelle un écrou 52 équipé d'un système de freinage est vissé. Lorsqu'il est serré, cet écrou 52 prend appui contre la deuxième extrémité de l'axe principal 38.

Pour pouvoir serrer l'écrou 46, la tête 42 de l'axe principal 38 présente, sur sa face orientée vers la tête 48 de l'axe de secours 40, deux creux 54 diamétralement opposés configurés pour recevoir deux pions 56 solidaires de la tête 48 de l'axe de secours 40. En complément, la tête 48 de l'axe de secours 40 comprend, en périphérie, deux méplats pour la maintenir, à l'aide d'une clé, immobile en rotation.

En fonctionnement normal, seul l'axe principal 38 est chargé.

Lors d'un contrôle du bon fonctionnement de l'axe de pivotement 32, après le retrait de l'écrou 52, un opérateur essaie de faire pivoter l'axe de secours 40 à l'intérieur de l'axe principal 38. Si l'axe de secours 40 ne peut pas pivoter, cela signifie que l'axe principal 38 est défaillant et que l'axe de pivotement 32 doit être réparé.

A l'issue du contrôle, il est impératif que l'axe de secours 40 soit correctement remonté.

Or, la présence de l'axe de secours 40 n'est pas nécessaire pour monter et serrer l'axe principal 38 si une clé à ergot coopérant avec les creux 54 de la tête 42 est utilisée pour immobiliser l'axe principal 38 lors du serrage de l'écrou 46.

Par ailleurs, même si l'axe de secours 40 est inséré dans l'axe principal et qu'il est immobilisé en rotation avec une clé pour immobiliser en rotation l'axe principal 38, l'axe de secours 40 peut, en fonctionnement, sortir de l'axe principal 38 si l'opérateur oublie de visser l'écrou 52 équipé de son système de freinage.

La présente invention vise à remédier aux inconvénients de l'art antérieur.

A cet effet, l'invention a pour objet un axe de pivotement pour une attache-moteur d'aéronef tel que revendiqué dans la revendication 1. L'invention permet d'éviter que l'axe de secours ne sorte de l'axe principal si le deuxième écrou n'est pas vissé. De plus, le premier écrou et l'axe de secours étant reliés, l'axe de secours est nécessairement présent dans l'axe principal lorsque le premier écrou est vissé sur l'axe principal.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une représentation schématique d'un ensemble propulsif relié à une voilure qui illustre un mode de réalisation,
- La figure 3 est une vue en perspective d'une attache-moteur arrière qui illustre un mode de réalisation,
- La figure 4 est une coupe en perspective d'un axe de pivotement d'une attache-moteur qui illustre un mode de réalisation de l'art antérieur,
- La figure 5 est une coupe en perspective d'un axe de pivotement d'une attache-moteur qui illustre un premier mode de réalisation de l'invention,
- Les figures 6A à 6E sont des coupes en perspective qui illustrent les différentes étapes de montage d'un axe de secours de l'axe de pivotement visible sur la figure 5,
- La figure 7 est une coupe en perspective d'un axe de pivotement d'une attache-moteur qui illustre un deuxième mode de réalisation de l'invention, et
- La figure 8 est une vue de détail d'un axe de secours de l'axe de pivotement visible sur la figure 7.

Selon un mode de réalisation illustré sur la figure 5, une attache-moteur arrière 60 comprend une chape 62, solidaire d'une structure primaire d'un mât d'aéronef, reliée par une liaison 64 à une platine triangulaire 66 reliée elle-même à un moteur d'aéronef. La liaison 64 comprend un axe de pivotement 68, qui supporte en partie centrale une rotule 70 reliant l'axe de pivotement 68 et la platine triangulaire 66, et deux paliers lisses 72, 72', disposés de part et d'autre de la rotule 70, reliant l'axe de pivotement 68 et les branches 62.1, 62.2 de la chape 62. Ainsi, l'axe de pivotement 68 de l'invention peut aussi bien se monter sur les nouvelles attaches-moteurs que les existantes.

A l'exception de l'axe de pivotement 68, les autres éléments de la liaison 64 peuvent être identiques à ceux de l'art antérieur précédemment décrit.

Par ailleurs, bien que décrit appliqué à une attache-moteur arrière, l'axe de pivotement 68 de l'invention peut être utilisé pour les autres attaches-moteurs.

Pour la suite de la description, une direction longitudinale est parallèle à l'axe A68 de l'axe de pivotement 68.

L'axe de pivotement 68 comprend un premier axe, appelé axe principal 74, et un deuxième axe, appelé axe de secours 76, coaxial à l'axe principal 74 et monté à l'intérieur de ce dernier. Le diamètre extérieur de l'axe de secours 76 est légèrement inférieur au diamètre intérieur de l'axe principal 74 de manière à ne pas engager l'axe de secours 76 à l'intérieur de l'axe principal 74 en fonctionnement normal.

L'axe principal 74 comprend, à une première extrémité 74.1, une tête 78 configurée pour prendre appui en fonctionnement contre une première branche 62.1 de la chape 62 et/ou un premier palier lisse 72 et, à une deuxième extrémité 74.2, une portion filetée 80 sur laquelle un écrou 82 équipé d'un système de freinage 84 est vissé. Lorsqu'il est serré, cet écrou 82 prend appui contre une deuxième branche 62.2 de la chape 62 et/ou un deuxième palier lisse 72'.

Selon un mode de réalisation, la tête 78 se présente sous la forme d'une collerette.

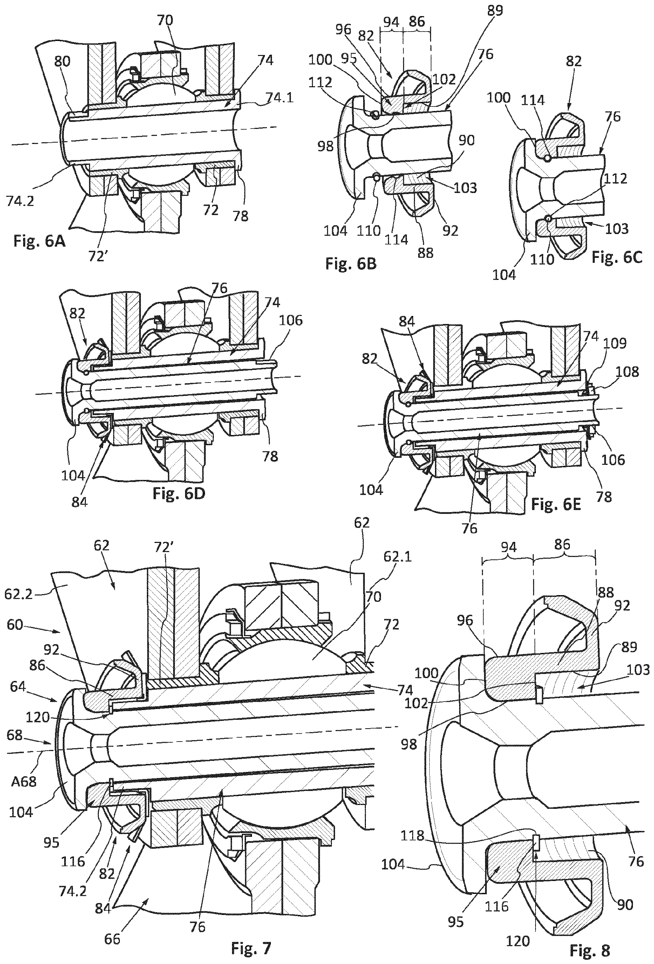

Comme illustré sur les figures 6B et 8, l'écrou 82 comprend un premier tronçon 86 qui présente un corps tubulaire 88, pourvu sur sa face intérieure 89 d'un filetage 90 configuré pour se visser sur la portion filetée 80 de l'axe principal 74, et une tête 92, solidaire d'une première extrémité du corps tubulaire 88, configurée pour prendre appui contre la deuxième branche 62.2 de la chape 62 et/ou le deuxième palier lisse 72'. Selon un mode de réalisation, la tête 92 se présente sous la forme d'une collerette.

Ce premier tronçon 86 de l'écrou 82 peut être identique à l'écrou d'un axe principal de l'art antérieur. De même, le système de freinage 84 peut être identique à celui de l'art antérieur.

Selon une particularité de l'invention, l'écrou 82 comprend un deuxième tronçon 94 sous la forme d'un prolongement 95 solidaire d'une deuxième extrémité du corps tubulaire 88, en saille par rapport à la deuxième extrémité 74.2 de l'axe principal 74 lorsque l'écrou 82 est vissé et serré. Par conséquent, l'axe principal 74 et le corps tubulaire 88 ont des longueurs telles que le prolongement 95 est en saillie par rapport à la deuxième extrémité 74.2 de l'axe principal 74 lorsque l'écrou 82 est vissé et serré.

Selon un mode de réalisation, le prolongement 95 a une forme approximativement tubulaire et présente une surface cylindrique extérieure 96 avec un diamètre extérieur sensiblement égal au diamètre extérieur du corps tubulaire 88 du premier tronçon 86 et une surface cylindrique intérieure 98 avec un diamètre intérieur légèrement supérieur au diamètre intérieur de l'axe principal 74 et inférieur au diamètre extérieur de la portion filetée 80 de l'axe principal 74.

Le prolongement 95 présente également une face terminale 100 qui relie les surfaces cylindriques extérieure et intérieure 96, 98, à l'opposé du premier tronçon 86, et une face transversale 102 qui relie la surface cylindrique intérieure 98 du prolongement 95 et la face intérieure 89 du corps tubulaire 88 du premier tronçon 86. Ainsi, cette face transversale 102 correspond au fond d'un logement 103 délimité par la face transversale 102 et la face intérieure 89 du corps tubulaire 88 du premier tronçon 86 et configuré pour loger la deuxième extrémité 74.2 de l'axe principal 74.

L'axe de secours 76 comprend, à une première extrémité, une tête 104 et, à une deuxième extrémité, une portion filetée 106 sur laquelle un écrou 108 équipé d'un système de freinage 109 est vissé. Cet écrou 108 et son système de freinage 109 peuvent être identiques à ceux de l'art antérieur. Selon un mode de réalisation, la tête 104 se présente sous la forme d'une collerette.

Selon une particularité de l'invention, la tête 104 de l'axe de secours 76 est configurée pour prendre appui contre l'écrou 82 de l'axe principal 74 et plus particulièrement contre sa face terminale 100. Lorsqu'il est serré, l'écrou 108 prend appui contre la tête 78 de l'axe principal 74.

Chaque tête 78, 104 de l'axe principal 74 et de l'axe de secours 76 comprend un moyen (méplat, empreinte, autre) pour l'immobiliser en rotation lors du serrage des écrous 82 et 108.

Selon un premier mode de réalisation visible sur la figure 5, l'axe de secours 76 est relié à l'écrou 82 de l'axe principal par un jonc d'arrêt 110. A cet effet, l'axe de secours 76 comprend une première gorge 112 configurée pour loger partiellement le jonc d'arrêt 110 et l'écrou 82 comprend une deuxième gorge 114 configurée pour loger partiellement le jonc d'arrêt 110. La deuxième gorge 114 est réalisée au niveau de la surface cylindrique intérieure 98 du deuxième tronçon 94 de l'écrou 82.

La première gorge 112 et la tête 104 de l'axe de secours sont séparées d'une distance sensiblement égale à la distance séparant la deuxième gorge 114 et la face terminale 100 de l'écrou 82 de manière à ce que la face terminale 100 de l'écrou 82 soit en contact contre la tête 104 de l'axe de secours 76 lorsque ce dernier et l'écrou 82 sont immobilisés en translation par le jonc d'arrêt 110.

Le diamètre de la section du jonc d'arrêt 110 est sensiblement égal à la moitié de la différence entre le diamètre de la surface intérieure 98 du deuxième tronçon 94 de l'écrou 82 et le diamètre extérieur de l'axe de secours 76.

Selon un deuxième mode de réalisation visible sur les figures 7 et 8, l'axe de secours 76 est relié à l'écrou 82 de l'axe principal par un circlips 116. A cet effet, l'axe de secours 76 comprend une gorge 118 configurée pour loger partiellement le circlips 116.

La gorge 118 et la tête 104 de l'axe de secours 76 sont séparées d'une distance sensiblement égale à la distance séparant la face terminale 100 et la face transversale 102 de l'écrou 82 de sorte que la face terminale 100 de l'écrou 82 soit en contact avec la tête 104 de l'axe de secours 76 lorsque ce dernier et l'écrou 82 sont immobilisés en translation par le circlips 116. Quel que soit le mode de réalisation, l'axe de secours 76 et l'écrou 82 de l'axe principal 74 sont reliés par une liaison axiale 120 configurée pour immobiliser, selon une translation parallèle à l'axe A68 de l'axe de pivotement 68, l'axe de secours 76 par rapport à l'écrou 82, tout en permettant un mouvement de rotation, autour de l'axe A68 de l'axe de pivotement 68, de l'écrou 82 par rapport à l'axe de secours 76. Une fois l'axe de pivotement monté, la tête 104 de l'axe de secours 76 est plaquée contre l'écrou 82 de l'axe principal 74.

Selon le premier mode de réalisation, la liaison axiale 120 comprend le jonc d'arrêt et les première et deuxième gorges 112 et 114. Selon le deuxième mode de réalisation, la liaison axiale comprend le circlips 116 et la gorge 118.

Le montage de l'axe de pivotement 68 est décrit au regard des figures 6A à 6E.

Lors d'une première étape, l'axe principal 74 est inséré dans les paliers lisses 72, 72' et la rotule 70, comme illustré sur la figure 6A.

Lors d'une deuxième étape, le jonc d'arrêt 110 est positionné dans la gorge 112 de l'axe de secours 76 et l'écrou 82 est emmanché sur l'axe de secours 76, comme illustré sur la figure 6B, jusqu'à ce que la face terminale 100 de l'écrou 82 prenne appui contre la tête 104 de l'axe de secours 76 et que le jonc d'arrêt 110 se loge dans la gorge 114 de l'écrou 82, comme illustré sur la figure 6C.

Dans le cas d'un cirlips 116, l'écrou 82 est emmanché sur l'axe de secours 76 jusqu'à venir en butée contre la tête 104 de l'axe de secours 76 puis le circlips 116 est positionné dans la gorge 118 de l'axe de secours 76 en utilisant une pince spécifique, le circlips 116 étant positionné au fond du logement 103.

Lors d'une troisième étape visible sur la figure 6D, l'axe de secours 76 est introduit dans l'axe principal 74. Lorsque le système de freinage 84 de l'écrou 82 se présente sous la forme d'une rondelle frein, cette dernière est emmanché sur l'axe de secours 76 avant que ce dernier ne soit introduit dans l'axe principal 74. En suivant, l'écrou 82 est vissé sur l'axe principal 74 jusqu'à ce que l'axe principal 74 soit serré. Le système de freinage 84 est alors verrouillé pour immobiliser en rotation l'écrou 82 par rapport à l'axe principal 74.

A ce stade, l'axe de secours 76 est encore libre en rotation mais il est bloqué en translation et ne peut plus sortir de l'axe principal 74.

Lors d'une quatrième étape visible sur la figure 6E, l'écrou 108 et son système de freinage 109 sont positionnés sur l'extrémité de l'axe de secours 76 et l'écrou 108 est vissé jusqu'à ce que l'axe de secours 76 soit totalement bloqué. Le système de freinage 109 est alors verrouillé pour immobiliser en rotation l'écrou 108 par rapport à l'axe principal 74. L'invention permet d'éviter que l'axe de secours 76 ne sorte de l'axe principal 74 si l'écrou 108 de l'axe de secours 76 n'est pas vissé.

De plus, l'écrou 82 de l'axe principal 74 et l'axe de secours 76 étant reliés, l'axe de secours 76 est nécessairement présent dans l'axe principal 74 lorsque l'écrou 82 est vissé sur l'axe principal 74.

## Revendications

1. Axe de pivotement (68) pour une attache-moteur d'aéronef, comprenant :
- un axe principal (74) tubulaire qui présente à une première extrémité (74.1) une tête (78) et à une deuxième extrémité (74.2) une portion filetée (80),
- un premier écrou (82) configuré pour se visser sur la portion filetée (80) de l'axe principal (74),
- un axe de secours (76) configuré pour être monté pivotant à l'intérieur de l'axe principal (74) et présentant à une première extrémité (76.1) une tête (104) et à une deuxième extrémité (76.2) une portion filetée (106), et
- un deuxième écrou (108) configuré pour se visser sur la portion filetée (106) de l'axe de secours (76),
**caractérisé en ce que** l'axe de secours (76) et le premier écrou (82) sont reliés par une liaison axiale (120) configurée pour immobiliser en translation l'un par rapport à l'autre l'axe de secours (76) et le premier écrou (82), tout en permettant un mouvement de rotation de l'un par rapport à l'autre du premier écrou (82) et de l'axe de secours (76).

2. Axe de pivotement selon la revendication 1, **caractérisé en ce que** la tête (104) de l'axe de secours (76) est plaquée contre le premier écrou (82) de l'axe principal (74).

3. Axe de pivotement selon la revendication 1 ou 2, **caractérisé en ce que** le premier écrou (82) comprend :
- un corps tubulaire (88) pourvu sur une face intérieure (89) d'un filetage (90) configuré pour se visser sur la portion filetée (80) de l'axe principal (74),
- une tête (92) solidaire d'une première extrémité du corps tubulaire (88),
- un prolongement (95) solidaire d'une deuxième extrémité du corps tubulaire (88), en saille par rapport à la deuxième extrémité (74.2) de l'axe principal (74) lorsque le premier écrou (82) est vissé et serré.

4. Axe de pivotement selon la revendication précédente, **caractérisé en ce que** le prolongement (95) présente une surface cylindrique intérieure (98) avec un diamètre intérieur supérieur au diamètre intérieur de l'axe principal (74) et inférieur au diamètre extérieur de la portion filetée (80) de l'axe principal (74), une face terminale (100) à l'opposé du corps tubulaire (88) et une face transversale (102) reliant la surface cylindrique intérieure (98) du prolongement (95) et la face intérieure (89) du corps tubulaire (88), la face transversale (102) et la face intérieure (89) du corps tubulaire (88) délimitant un logement (103) configuré pour loger la deuxième extrémité (74.2) de l'axe principal (74).

5. Axe de pivotement selon l'une des revendications précédentes, **caractérisé en ce que** la liaison axiale (120) comprend un jonc d'arrêt (110), une première gorge (112) sur l'axe de secours (76), configurée pour loger partiellement le jonc d'arrêt (110) et une deuxième gorge (114) sur le premier écrou (82), configurée pour loger partiellement le jonc d'arrêt (110).

6. Axe de pivotement selon la revendication précédente, **caractérisé en ce que** les première et deuxième gorges (112, 114) sont positionnées de manière à ce que le premier écrou (82) soit en contact contre la tête (104) de l'axe de secours (76) lorsque l'axe de secours (76) et le premier écrou (82) sont immobilisés en translation par le jonc d'arrêt (110).

7. Axe de pivotement selon l'une des revendications 1 à 4, **caractérisé en ce que** la liaison axiale (120) comprend un circlips (116) et une gorge (118) sur l'axe de secours (76) configurée pour loger partiellement le circlips (116).

8. Axe de pivotement selon la revendication précédente, **caractérisé en ce que** la gorge (118) est positionnée par rapport à la tête (104) de l'axe de secours (76) de manière à ce que le premier écrou (82) soit en contact avec la tête (104) de l'axe de secours (76) lorsque l'axe de secours (76) et le premier écrou (82) sont immobilisés en translation par le circlips (116).

9. Attache-moteur d'un aéronef comprenant un axe de pivotement selon l'une des revendications précédentes.

10. Aéronef comprenant une attache-moteur selon la revendication précédente.

## Patentansprüche

1. Schwenkachse (68) für eine Triebwerkaufhängung eines Luftfahrzeugs, die enthält:
- eine rohrförmige Hauptachse (74), die an einem ersten Ende (74.1) einen Kopf (78) und an einem zweiten Ende (74.2) einen Gewindeabschnitt (80) aufweist,
- eine erste Mutter (82), die konfiguriert ist, auf den Gewindeabschnitt (80) der Hauptachse (74) geschraubt zu werden,
- eine Hilfsachse (76), die konfiguriert ist, schwenkbar ins Innere der Hauptachse (74) montiert zu werden, und an einem ersten Ende (76.1) einen Kopf (104) und an einem zweiten Ende (76.2) einen Gewindeabschnitt (106) aufweist, und
- eine zweite Mutter (108), die konfiguriert ist, auf den Gewindeabschnitt (106) der Hilfsachse (76) geschraubt zu werden,
**dadurch gekennzeichnet, dass** die Hilfsachse (76) und die erste Mutter (82) durch eine axiale Verbindung (120) verbunden sind, die konfiguriert ist, die Hilfsachse (76) und die erste Mutter (82) in Translation zueinander zu arretieren und gleichzeitig eine Drehbewegung der ersten Mutter (82) und der Hilfsachse (76) zueinander zu erlauben.

2. Schwenkachse nach Anspruch 1, **dadurch gekennzeichnet, dass** der Kopf (104) der Hilfsachse (76) gegen die erste Mutter (82) der Hauptachse (74) gedrückt ist.

3. Schwenkachse nach Anspruch 1 oder 2, **dadurch gekennzeichnet, dass** die erste Mutter (82) enthält:
- einen rohrförmigen Körper (88), der auf einer Innenseite (89) mit einem Gewinde (90) versehen ist, das konfiguriert ist, auf den Gewindeabschnitt (80) der Hauptachse (74) geschraubt zu werden,
- einen Kopf (92), der fest mit einem ersten Ende des rohrförmigen Körpers (88) verbunden ist,
- eine fest mit einem zweiten Ende des rohrförmigen Körpers (88) verbundene Verlängerung (95), die bezüglich des zweiten Endes (74.2) der Hauptachse (74) vorsteht, wenn die erste Mutter (82) aufgeschraubt und angezogen ist.

4. Schwenkachse nach dem vorhergehenden Anspruch, **dadurch gekennzeichnet, dass** die Verlängerung (95) eine zylindrische Innenfläche (98) mit einem Innendurchmesser größer als der Innendurchmesser der Hauptachse (74) und kleiner als der Außendurchmesser des Gewindeabschnitts (80) der Hauptachse (74), eine Endseite (100) entgegengesetzt zum rohrförmigen Körper (88) und einer Querseite (102) aufweist, die die zylindrische Innenfläche (98) der Verlängerung (95) und die Innenseite (89) des rohrförmigen Körpers (88) verbindet, wobei die Querseite (102) und die Innenseite (89) des rohrförmigen Körpers (88) eine Aufnahme (103) begrenzen, die konfiguriert ist, das zweite Ende (74.2) der Hauptachse (74) aufzunehmen.

5. Schwenkachse nach einem der vorhergehenden Ansprüche, **dadurch gekennzeichnet, dass** die axiale Verbindung (120) einen Haltering (110), eine erste Rille (112) auf der Hilfsachse (76), die konfiguriert ist, den Haltering (110) teilweise aufzunehmen, und eine zweite Rille (114) auf der ersten Mutter (82) aufweist, die konfiguriert ist, den Haltering (110) teilweise aufzunehmen.

6. Schwenkachse nach dem vorhergehenden Anspruch, **dadurch gekennzeichnet, dass** die erste und die zweite Rille (112, 114) so positioniert sind, dass die erste Mutter (82) gegen den Kopf (104) der Hilfsachse (76) in Kontakt ist, wenn die Hilfsachse (76) und die erste Mutter (82) durch den Haltering (110) in Translation arretiert sind.

7. Schwenkachse nach einem der Ansprüche 1 bis 4, **dadurch gekennzeichnet, dass** die axiale Verbindung (120) einen Sicherungsring (116) und eine Rille (118) auf der Hilfsachse (76) enthält, die konfiguriert ist, den Sicherungsring (116) teilweise aufzunehmen.

8. Schwenkachse nach dem vorhergehenden Anspruch, **dadurch gekennzeichnet, dass** die Rille (118) bezüglich des Kopfes (104) der Hilfsachse (76) so positioniert ist, dass die erste Mutter (82) mit dem Kopf (104) der Hilfsachse (76) in Kontakt ist, wenn die Hilfsachse (76) und die erste Mutter (82) durch den Sicherungsring (116) in Translation arretiert sind.

9. Triebwerksaufhängung eines Luftfahrzeugs, die eine Schwenkachse nach einem der vorhergehenden Ansprüche enthält.

10. Luftfahrzeug, das eine Triebwerksaufhängung nach dem vorhergehenden Anspruch enthält.

## Claims

1. Swivel axis (68) for an aircraft engine attachment, comprising:
- a tubular main axis (74) which has, at a first end (74.1), a head (78) and, at a second end (74.2), a threaded portion (80),
- a first nut (82) configured to be screwed onto the threaded portion (80) from the main axis (74),
- a fail-safe axis (76) configured to be mounted to swivel inside the main axis (74) and having, at a first end (76.1), a head (104) and, at a second end (76.2), a threaded portion (106), and
- a second nut (108) configured to be screwed onto the threaded portion (106) of the fail-safe axis (76),
**characterized in that** the fail-safe axis (76) and the first nut (82) are linked by an axial link (120) configured to translationally immobilize relative to one another the fail-safe axis (76) and the first nut (82), while allowing a rotational movement of one relative to the other of the first nut (82) and of the fail-safe axis (76) .

2. Swivel axis according to Claim 1, **characterized in that** that head (104) of the fail-safe axis (76) is pressed against the first nut (82) of the main axis (74).

3. Swivel axis according to Claim 1 or 2, **characterized in that** the first nut (82) comprises:
- a tubular body (88) provided on an inner face (89) with a threading (90) configured to be screwed onto the threaded portion (80) of the main axis (74),
- a head (92) secured to a first end of the tubular body (88),
- an extension (95) secured to a second end of the tubular body (88), protruding relative to the second end (74.2) of the main axis (74) when the first nut (82) is screwed and tightened.

4. Swivel axis according to the preceding claim, **characterized in that** the extension (95) has an inner cylindrical surface (98) with an inner diameter greater than the inner diameter of the main axis (74) and less than the outer diameter of the threaded portion (80) of the main axis (74), a terminal face (100) opposite the tubular body (88) and a transverse face (102) linking the inner cylindrical surface (98) of the extension (95) and the inner face (89) of the tubular body (88), the transverse face (102) and the inner face (89) of the tubular body (88) delimiting a housing (103) configured to house the second end (74.2) of the main axis (74).

5. Swivel axis according to one of the preceding claims, **characterized in that** the axial link (120) comprises a circlip (110), a first groove (112) on the fail-safe axis (76), configured to partially house the circlip (110) and a second groove (114) on the first nut (82), configured to partially house the circlip (110).

6. Swivel axis according to the preceding claim, **characterized in that** the first and second grooves (112, 114) are positioned so that the first nut (82) is in contact against the head (104) of the fail-safe axis (76) when the fail-safe axis (76) and the first nut (82) are translationally immobilized by the circlip (110).

7. Swivel axis according to one of Claims 1 to 4, **characterized in that** the axial link (120) comprises a retaining ring (116) and a groove (118) on the fail-safe axis (76) configured to partially house the retaining ring (116).

8. Swivel axis according to the preceding claim, **characterized in that** the groove (118) is positioned relative to the head (104) of the fail-safe axis (76) in such a way that the first nut (82) is in contact with the head (104) of the fail-safe axis (76) when the fail-safe axis (76) and the first nut (82) are translationally immobilized by the retaining ring (116).

9. Aircraft engine attachment comprising a swivel axis according to one of the preceding claims.

10. Aircraft comprising an engine attachment according to the preceding claim.
